# EUROPEAN PATENT SPECIFICATION

(11) **EP 2 240 854 B1**
(45) Date of publication and mention of the grant of the patent: **21.02.2018**
(21) Application number: 08865240.9
(22) Date of filing: 12.12.2008
(51) Int. Cl.: H04L 12/26, H04L 29/12, H04L 12/24

(54) **METHOD OF RESOLVING NETWORK ADDRESS TO HOST NAMES IN NETWORK FLOWS FOR NETWORK DEVICE**
VERFAHREN ZUM AUFLÖSEN EINER NETZWERKADRESSE IN HOSTNAMEN IN NETZWERKFLÜSSEN FÜR EINE NETZWERKEINRICHTUNG
PROCÉDÉ POUR TRADUIRE L'ADRESSE DE RÉSEAU EN DES NOMS D'HÔTE DANS DES FLUX DE RÉSEAU POUR UN DISPOSITIF RÉSEAU

(30) Priority: 18.12.2007 US 911
(43) Date of publication of application: 20.10.2010
(73) Proprietor: Solarwinds Worldwide, LLC, Austin, TX 78746 (US)
(72) Inventor: STEPHENS, Josh, Austin, TX 78739 (US)
(74) Representative: TBK
(86) International application number: PCT/US2008/013691
(87) International publication number: WO 2009/082438

(56) References cited:
- EP-A- 1 788 489
- US-A1- 2005 138 163
- US-A1- 2007 192 863

## Description

### Field of the Invention

The present invention relates to using network flows data exported from network routers to provide information about the traffic entering/exiting the device. Network flow information exported from network devices identify the network devices involved in the flow using their network address. This application describes the steps necessary to efficiently resolve the network device address to their domain names using user friendly names of the network devices.

### Background of the Invention

Network usage data is useful for many important business functions, such as subscriber billing, marketing & customer care, product development, network operations management, network and systems capacity planning, and security. Network usage data does not include the actual information exchanged in a communications session between parties, but rather includes numerous usage detail records, known as "flow records" containing one or more types of metadata (i.e., "data about data"). Known network flow records protocols include Netflow®, sFlow®, jFlow®, cFlow® or Netstream®. As used herein, a flow record is defined as a small unit of measure of unidirectional network usage by a stream of IP packets that share common source and destination parameters during a time interval.

The types of metadata included within each flow record vary based on the type of service and network involved and, in some cases, based on the particular network device providing the flow records. In general, a flow record provides detailed usage information about a particular event or communications connection between parties, such as the connection start time and stop time, source (or originator) of the data being transported, the destination or receiver of the data, and the amount of data transferred. A flow record summarizes usage information for very short periods of time (from milliseconds to seconds, occasionally minutes). Depending on the type of service and network involved, a flow record may also include information about the transfer protocol, the type of data transferred, the type of service (ToS) provided, etc. In telephony networks, the flow records that make up the usage information are referred to as call detail records (CDRs).

In network monitoring, the network flow records are collected, stored and analyzed to produce meaningful results. Network usage analysis systems process these flow records and generate reports or summarized data files that support various business functions. Network usage analysis systems provide information about how a network services are being used and by whom. Network usage analysis systems can also be used to identify (or predict) customer satisfaction-related issues, such as those caused by network congestion and network security abuse. In one example, network utilization and performance, as a function of subscriber usage behavior, may be monitored to track a user's experience, to forecast future network capacity, or to identify usage behavior indicative of network abuse, fraud and theft.

Furthermore, known techniques for identifying virus are limited. The known techniques generally look for secondary effects of the virus, such as monitoring network resource usage and identifying applications requesting an unnaturally large amount of the network resources. However, it may be difficult to differentiate between the virus and legitimate applications that require a large amount of network resources. Also, viruses are becoming more intelligent to avoid detection. A virus may sit dormant on a system for some time, waiting for a signal to initiate. For example, a malicious virus may sit dormant until confidential data is acquired. Thus, while the virus is waiting to act, it would be difficult to detect because it produces minimal side-effects.

The US 2005/138163 A1 discloses a system for processing network accounting information. A first network accounting record is received from a first source. Thereafter, the first network accounting record is correlated with accounting information available from a second source. The accounting information with which the first network accounting record is correlated is then used to enhance the first network accounting record.

The EP 1 788 489 A discloses a method of examining packets passing through a connection point on a computer network. Each packet conforms to one or more protocols. The method includes receiving a packet from a packet acquisition device and performing one or more parsing/extraction operations on the packet to create a parser record comprising a function of selected portions of the packet. The parsing/extraction operations depend on one or more of the protocols to which the packet conforms. The method further includes looking up a flow-entry database containing flow-entries for previously encountered conversational flows. The lookup uses the selected packet portions and determines if the packet is of an existing flow. If the packet is of an existing flow, the method classifies the packet as belonging to the found existing flow, and if the packet is of a new flow, the method stores a new flow-entry for the new flow in the flow-entry database, including identifying information for future packets to be identified with the new flow-entry.

### SUMMARY OF THE INVENTION

The present invention provides a system and method for resolving network address to host names in network flows for network devices as defined in the appended claims. The system includes network device configured to produce a flow record, a flow record storage configured to receive said flow record from said network device and to store said flow record, and a data analysis tool configured to access said stored flow record and to identify a numerical network address contained in the stored flow record. Then, an address analysis tool configured to receive the numerical network address and to identify a text network address corresponding to said numerical network address.

Optionally, the flow record storage is configured to receive the text network address and to modify the stored flow record to include the text network address. The system may further include a user interface configured to receive and display the flow record and the text network address. Optionally, the network device is configured to receive an indication of the numerical network address from a user interface and to add the numerical network address to an access control list. Also, the user interface may forward the indication of said numerical network address in response to predefined criteria. A data input device may define the predefined criteria. The address analysis tool may further include a mapping table configured to associate the numerical network address with a text network address. Also, the address analysis tool may also include a data agent configured access the network to populate the mapping table.

A method for resolving network address to host names in network flows for a network device may include the steps of receiving a flow record from the network device and storing said flow record from said network device. Next, a network address contained in the stored flow record is located, and a host name corresponding to said numerical network address is identified.

Optionally, the method may include the step of modifying the stored flow record to include the host name. Also, the method may include the step of displaying the flow record and the host name. The method may include the steps of the network device receiving an indication of said network address. The indication of said network address may be sent in response to predefined criteria. The method optionally includes a step of accepting a data input to define the predefined criteria. Also, the method optionally includes the step of configuring a mapping table to associate the network address with host name. Also, the method may include configuring a data agent to access a network to populate the mapping table.

A system for dynamically resolving network address to host names in network flows for a network device includes a flow record storage system configured to receive and store a record of the flow and a data analysis device. The data analysis device is configured to access the storage system and to identify a network address in the flow record, and to modify the flow record to replace the network address with a host name. Optionally, the data analysis device includes a mapping table configured to associate the network address with the host name. The data analysis device may also include a user interface configured to display the flow record comprising the host name. Also, the data analysis device may include a data agent configured to receive the network address, to access a network to identify the host name, and to populate the mapping table with said network address and said host name.

Optionally, the data agent stops after a certain number of tries or after a certain period of time and returns an error message to indicate that a host name associated with the network address cannot be easily found. Also, the mappings optionally expire after a certain period of time, there causing the data agent to refresh the mappings between the network addresses and the host names.

### Brief Description of the Drawings

The above and other objects, features and advantages of certain exemplary embodiments of the present invention will be more apparent from the following detailed description taken in conjunction with the accompanying drawings in which:
Figure 1A depicts an exemplary network in accordance with embodiments of the present invention network;
Figure 2 depicts an exemplary flow record;
Figure 3 depicts a exemplary table for storing the flow records in accordance with embodiments of the present invention;
Figure 4 depicts an exemplary table for storing aggregated flow records in accordance with embodiments of the present invention;
Figure 5A depicts an address mapping table in accordance with embodiments of the present invention;
Figure 5B depicts the exemplary flow record data table of Figure 3 that has been converted using the address mapping of Figure 5A in accordance with embodiments of the present invention;
Figure 6 is a service flow diagram that explains the communications between a network node, an access control system, and a flow record storage system in accordance with embodiments of the present invention; and
Figures 7A-7B are each a flow diagram depicting the steps in a method for creating flow records containing user friendly addresses in accordance with embodiments of the present invention.

### Detailed Description of the Preferred Embodiments

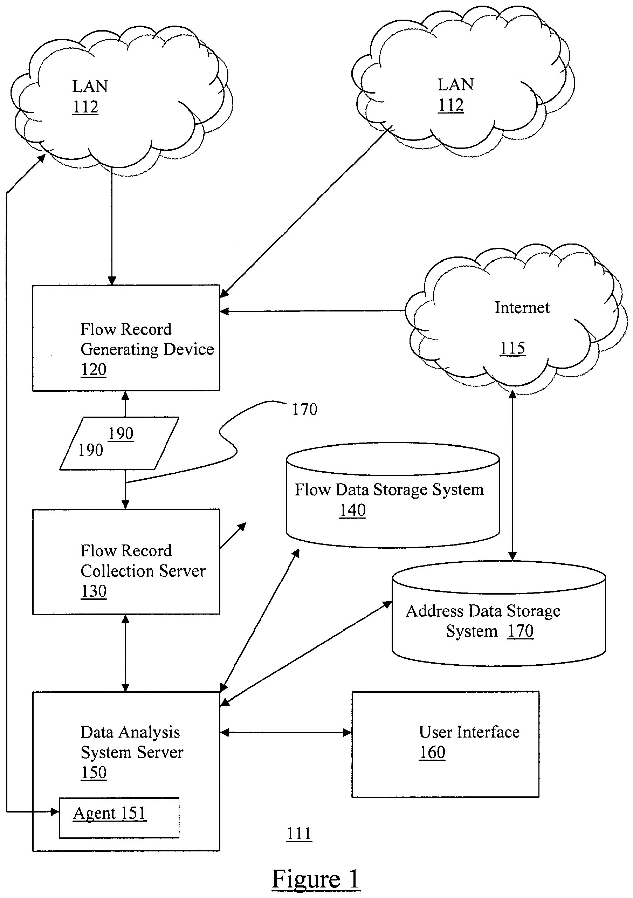

As shown in FIG. 1, a network usage analysis system 111 includes a data collection system server 130 and a data storage system 140, in one embodiment. The data collection system server 130, also called a listener, is a central server that collects the flows 190 from all various network agents 120 for storage and analysis. The data collection system server 130 receives flow records 190 from the flow record generating device 120, which is a network device that is part of an IP network 112, such as a local area network. In one embodiment, the IP network 112 includes the Internet 115.

In general, flow record generating devices 120 may include substantially any network device capable of handling raw network traffic at "line speeds" and generating flow records from that traffic. Exemplary flow record generating devices 120 include routers, switches and gateways, and in some cases, may include application servers, systems, and network probes. In most cases, the small flow record records generated by flow record generating devices 120 are exported as a stream of flow records 190 to the data collection system server 130.

Various network protocol run on network equipment for collecting network and internet protocol traffic information. Typically, various network agents 120, such as routers, have flow feature enabled to generate flow records. The flow records 190 are typically exported from the network agent 120 in User Datagram Protocol (UDP) or Stream Control Transmission Protocol (SCTP) packets and collected using a flow collector. For more information, please refer to Internet Engineering Task Force (IETF) standard for Internet Protocol Flow Information eXport (IPFIX) at http://www.ietf.org/html.charters/ipfix-charter.html.

As described above, flow records 190 are usually sent by the network agents 120 via a UDP or SCTP, and for efficiency reasons, the network agents 120 does not store flow records once they are exported. With a UDP flow, if the flow record 190 is dropped due to network congestion, between the network agent 120 and the data collection server 130, it may be lost forever because there is no way for the network agent 120 to resend the flow record 190. Flow may also be enabled on a per-interface basis to avoid unnecessarily burdening of the router's processor. Thus, the flows records 190 are generally based on the packets input to interfaces where it is enabled to avoid double counting and to save work for the network agent 120. Also, the network agent 120 may export a flow records for dropped packets.

Network flows have been defined in many ways. In one implementation, a flow includes a 5-tuple: a unidirectional sequence of packets to define Source IP address, Destination IP address, Source TCP port, Destination TCP port, and IP protocol. Typically, the network agent 120 will output a flow record when it determines that the flow is finished. The network agent 120 does this by "flow aging," where the network agent 120 resets an aging counter when the network agent 120 sees new traffic for an existing flow. Also, TCP session termination in a TCP flow causes the network agent 120 to expire the flow. The network agent 120 can also be configured to output a flow record at a fixed interval even if the flow is still ongoing. Alternatively, an administrator could define flow properties on the network agent 120.

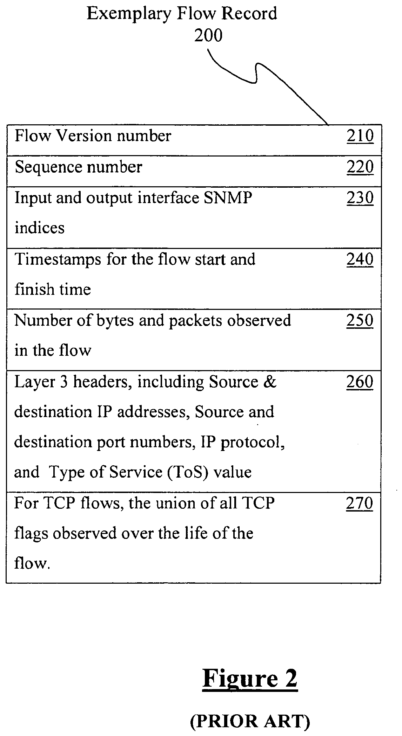

A flow record 190 can contain a wide variety of information about the traffic in a given flow. A known exemplary flow record 200 contains the following values, as defined in FIG. 2 (PRIOR ART). In particular, the known flow record 200 may include a version number 210 to identify the type of flow being used. A Sequence number 220 identifies the flow record.

Continuing with FIG. 2, input and output interface simple network management protocol (SNMP) indices 230 may be used to dynamically identify network devices through SNMP. SNMP is used by network management systems to monitor network-attached devices for conditions that warrant administrative attention, and consists of a set of standards for network management, including an Application Layer protocol, a database schema, and a set of data objects. SNMP exposes management data in the form of variables on the managed systems, which describe the system configuration. These variables can then be queried (and sometimes set) by managing applications. Modular devices may renumber their SNMP indexes whenever slotted hardware is added or removed. Index values are typically assigned at boot time and remain fixed until the next reboot.

Continuing with FIG. 2, each of the flow records 200 further typically includes information on the data transmission, including a time stamps of start and finish times 240. Other information on the data transmission includes information on the number of bytes and/or packets in a flow 250. The conditionals of the data transfer may also be included in the flow record 200, such as header data 260 describing the source and destination addresses, the source and destination addresses port numbers, transmission protocol, and the type of service (ToS). For Transmission Control Protocol (TCP), the flow record 200 may further indicate the union of all TCP flags during the flow. As well known from TCP, a data transmission involves a series of communications confirmations, for example, by pairs of acknowledgements flags (ACKs). An imbalance of TCP flags suggests a message failure, whereby a message was sent but never received.

Continuing with FIG. 1, the data collection system server 130 receives the streaming flow records 190 from flow record generating device 120 via a communication link 170. In one embodiment, the flow record generating device 120 may be included within network 112. In another embodiment, the flow record generating device 120 may be implemented at a location physically apart from, though functionally coupled to, network 112. Though shown in FIG. 1 as separate from the data collection system server 130, flow record generating device 120 may be a part of data analysis system server 130, in another embodiment.

A data analysis system server 150 accesses and uses the flow records 190 to perform predetermined network usage statistical analysis. In general, the data analysis system server 150 implements various statistical model that are defined to solve one or more network usage related problems, such as network congestion, network security abuse, fraud and theft, among others. The data analysis system server 150 uses the flow records 190 and the statistical models to generate a statistical result, which also may be subsequently stored within a data storage system 140. Exemplary embodiments for storing the statistical result will be described in more detail below. By analyzing flow data, the data analysis system server 150 can build a picture of traffic flow and traffic volume in a network. Applicant of the data analysis system 150 is described in greater detail below.

In one aspect, the data analysis system server 150 may be responsive to a user interface 160 for interactive analysis of the flow records 190. User interface 160 may comprise substantially any input/output device known in the art, such as a keyboard, a mouse, a touch pad, a display screen, etc. In one example, a graphical display of the statistical results may be output to a display screen at user interface 160.

In one embodiment, data analysis system server 150 comprises a computer software program, which is executable on one or more computers or servers for analyzing the network usage data in accordance with various embodiments of the invention. Although the data storage system 140 is shown as external to the data collection system server 130 and/or the data analysis system server 150, the data storage system 140 could be alternatively arranged within either of the servers 130 and 150. Data storage system 140 may comprise substantially any volatile memory (e.g., RAM) and/or non-volatile memory (e.g., a hard disk drive or other persistent storage device) known in the art.

In a preferred embodiment of the present invention, the data analysis tool; 150 further performance analysis as needed to interpret the flow record data using the address data storage system 170. In particular, the address data storage system 170 receives the addresses for the source and destination devices for flows, as described above in FIG. 2. As described above, the flow records 190 typically include one or more IP addresses, or other numerical addressing format. The Internet Protocol has two versions currently in use, IP version 4 (IPv4) and IP version 6 (Ipv6). IPv4 uses 32-bit (4 bytes) addresses whereas IPv6 has addresses that are 128 bits (16 bytes).

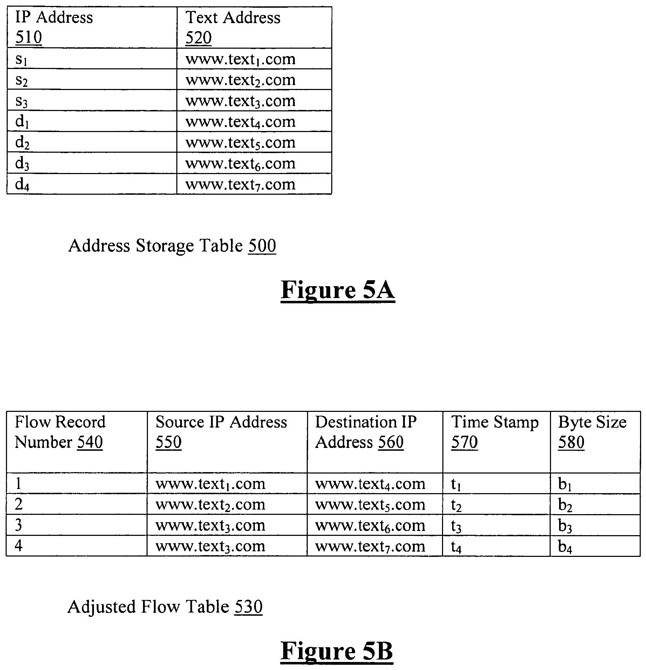

As described in greater detatil below in FIG. 5, the address data storage system 170 includes a database that maps a numeric IP addresses to a text address, thereby allowing the flow records 190 to be reviewed more easily by a user.

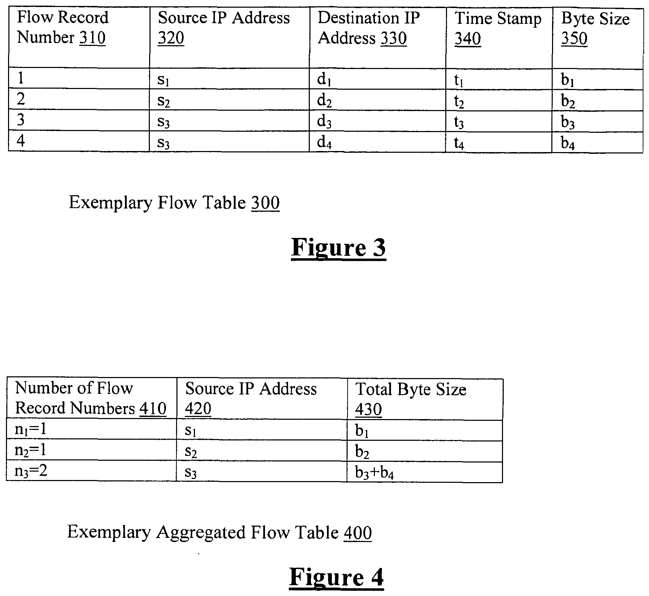

Referring now to FIG. 3, an exemplary table 300 for storing multiple flow records 200 in a storage device 140 is presented. In particular, the depicted table 300 includes a column that assigns a flow record identifier 310 for each of the received flow records 200. The table 300 also includes a column that contains an IP source address 320 for each of the received flow records 200, a column that contains an IP destination address 320 for each of the received flow records 200, a column that contains a time stamp 340 for each of the received flow records 200, and a column that contains a byte size 350 in the flows associated with the received flow records 200.

In the example of FIG. 3, the exemplary flow table 300 includes four flow records describing four flows, as indicated by the flow record identifier 310. In this particular example, the first three flows originated at three unique source addresses 320 at sources s1-s3 to three destination addresses 330 at sources dl-d3, while the fourth flow originated at source address 320 s3. Although not depicted, the exemplary flow table 300 could similarly include other aspects of the flow record 200, as described above in FIG. 2, such as QoS, transmission protocol, etc. Continuing with exemplary flow table 300 in FIG. 3, a time stamp value 340 indicates a time associated with each of the flows and bytes size value 350 to indicate the size of each of the flows associated with the listed flow records 1-4 identified in column 310.

Referring now to FIG. 4, the data in the exemplary flow data table 300 maybe aggregated according to known techniques. For example, the exemplary aggregated flow table 400 is aggregated according to the source IP address 420. Thus, it can be seen that the aggregated flow table 400 indicates in column Typically, the aggregation is done over one or more predefined time periods. For example, the exemplary aggregated flow table 400 includes a column that with the aggregated number of flow records 410 associated with each of the source IP addresses 420 in the table 300. The aggregated flow table 400 further indicates the total byte size 430 of the flows for each of the source IP addresses 420 in the table 400. Applications of the Aggregated flow table 400 are described below. As with the flow record table 300, it should be appreciated that flow records 190 may be aggregated as desired, for example according to one or more of the flow records categories described in the exemplary flow record 200 in FIG .2.

In FIG. 5A, an exemplary mapping table 500 stored in the address data storage system 170 is depicted. In particular, the mapping table 500 is used to map numerical IP addresses to corresponding text-based addresses. In the depicted example, an IP address 510 is mapped to a text address 520. In particular, continuing with the example above from the exemplary flow record table 300 in FIG. 3, the mapping table 500 includes a text-based address 520 for each of the source and destination addresses included in the flow record table 300. The formation of the mapping table 500 is described in greater detail below, but the application of the mapping table 500 is first introduced.

In FIG. 5B, a modified flow table 530 is created and stored in the flow data storage system 140 using the mapping table 500. In particular, it can be seen that the modified flow table 530 corresponds to the exemplary flow record table 300 in FIG. 3. In particular, the depicted modified table 530 also includes a column that assigns a flow record identifier 540 for each of the received flow records 200. The modified table 530 also includes a column that contains a source address 550 for each of the received flow records 200, a column that contains a destination address 560 for each of the received flow records 200, a column that contains a time stamp 570 for each of the received flow records 200, and a column that contains a byte size 580 in the flows associated with the received flow records 200. Thus, it can be seen that the modified flow table 530 corresponds to the exemplary flow record table 300 in FIG. 3. except that the IP source and destination addresses 320 and 330 have been replaced with text-based addresses 520 from the mapping table 500.

Referring back to FIG. 1, it is noted that the data analysis tool 150 may optionally include a data agent 151. The data agent 151 is typically a software tool configured to determine a text address associated with a given IP address. In normal Internet operations, a user inputs a text address that is forwarded to a name server to be converted into an IP address. The data agent operates in reverse by accessing a name server through the IP network 112 to determine a text address associated with a numerical IP address. Preferably, the IP to text address mapping is then stored for future use, whereby the next time an IP address is included in a flow record 200, the existing mappings in the mapping table 500 are used to determine the text address instead of asking the data agent 151 to reacquire the mapping.

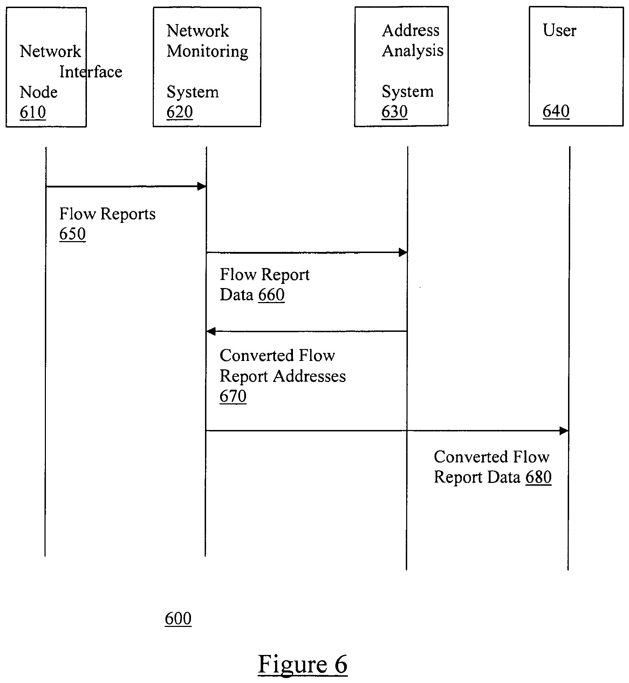

In FIG. 6, a process flow 600 for creating and using the modified flow record table 500 is described. The components included in the process flow 600 include a network node 610, a network monitoring system 620, an address analysis system 630, and a user interface 640. The functions of these components are now described. The network node forwards flow report 650 to the network monitoring system 620, which collects and stores the flow records according to conventional, known flow record collection technology. The address analysis system 630 accesses and acquires the flow report data 660 stored in the network monitoring system 620. The address analysis system 630 identifies the IP addresses contained in the flow report data 660, for example, by using a mapping table that the correlates the IP addresses to text-based addresses, as described above. The address analysis system 630 then replaces the IP addresses contained in the flow report data 660 with the text-based addresses and returns the converted flow records 670 for storage at the network monitoring system 620. A user may then use the user interface 640 to request the stored converted flow report data 680 from the network monitoring system 620.

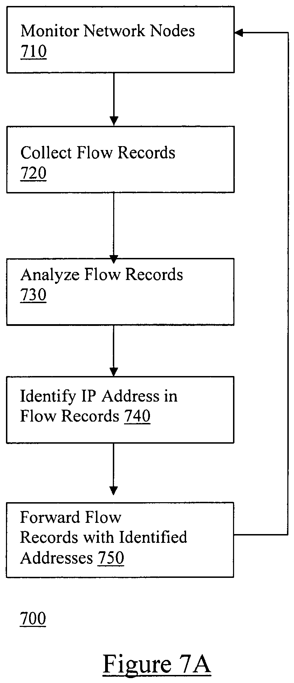

Referring now the FIG. 7A, a flow records address conversion method 700 in accordance with embodiments of the present invention is now disclosed. In step 710, the network components are monitored according to known techniques, as described above, and flow records are collected in step 720. Typically, steps 710 and 720 may be performed using functionalities already included in most network components, such as routers, hubs, servers, etc and may be used to collect and store a flow record table, such as exemplary flow record table 300. The collected flow records from step 720 are analyzed in step 730. For example, the flow records may be search to locate the various destination and sources IP addresses included in the flow records.

Continuing with the access control method 700, the IP addresses in the flow records analyzed in step 730 are identified in step 740. In particular, as described above, a more user-friendly version of the as devices addresses are determined, for example, by either using an address mapping table the includes a notation for converting the IP address to a text-based address, or by using a data agent to convert access an address server to convert the numerical IP address to a text-based address. In step 750, these text-based addresses in the flow records are forwarded to a user and may be used as needed. For example, the flow records can be updated to reflect the text-based addresses in addition to or in the alternative to the IP addresses. Optionally, the user may also receive flow records data indicating the text address and other aspects of the traffic associated with the flow record, such as the time, size, and duration of the flow.

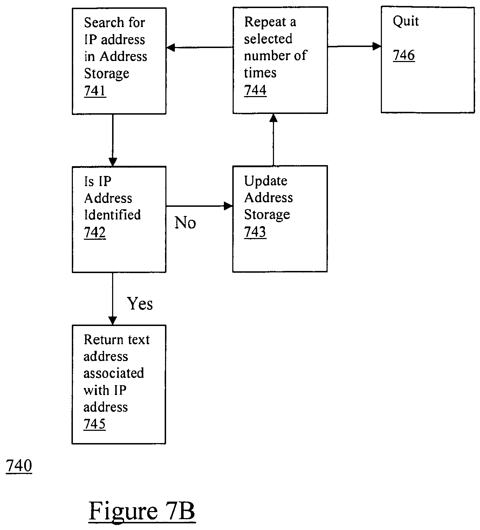

As depicted in FIG. 7B, the process of identifying the IP address in step 740 includes looking up IP address in an address table in step 741. The address table correlates the IP address to a text address. If the IP address is identified in step 742, than, the text address found in the address table that is associated with the IP address is returned in step 745.

If the IP address is not identified in step 743, than, the table is updated in step 743 to include the IP address and any mapping to a text address that can be determined using techniques as described above. Furthermore, the mapping between the IP address and one or more text addresses found in the address table typically are valid for a predefined period of time and expire after that time, thereby causing the mapping to be recreated. In this way, the mapping table can be constantly updated to reflect changes in address mapping, such as changes in the text addresses associated with a numerical IP address. After the mapping is updated to reflect new information or the deletion of a mapping that has become stale (or too old), the search for the IP address is repeated for a prespecified number of times in step 744, with the mapping table being searched again for the IP address. After a prespecified number of cycles or attempts or after a prespecified time period, the search for the IP address stops in step 746. Typically, if the search for a mapping to the IP address stops in step 746, then an error message is produced and forwarded to a user or administrator.

While the invention has been described with reference to an exemplary embodiments various additions, deletions, substitutions, or other modifications may be made without departing from the **scope of the appended claims.** Accordingly, the invention is not to be considered as limited by the foregoing description, but is only limited by the scope of the appended claims.

## Claims

1. A system for resolving network address to host names in network flows for a network device, the system comprising:
the network device (120) configured to produce a flow record;
a flow record storage (130) configured to receive said flow record from said network device (120) and to store said flow record in a flow table (140, 300) comprising a flow record identifier (310), numerical source address (320), numerical destination address (330), time stamp value (340), and byte size value (350);
a data analysis tool (150) configured to
use the stored flow records and statistical models to generate a statistical result that is subsequently stored in the flow record storage, wherein the statistical models are defined to solve network usage problems including network security abuse or fraud, and
access said stored flow record and to identify a numerical network address contained in the stored flow record; and
an address analysis tool (151, 630) comprising a mapping table (500), said mapping table comprising a plurality of mappings of numerical network addresses (510) to possible text network addresses (520), wherein each of said mappings associates one of said possible numerical network address with one of said possible text network addresses, wherein the address analysis tool is configured to receive the numerical network address, to identify one of said mappings corresponding to said numerical network address, and to return a text network address associated in said one identified mapping,
wherein the address analysis tool is further configured to create a modified flow table (530) using the mapping table, wherein the address analysis tool is configured to create the modified flow table by identifying the numerical source address and the numerical destination address in the flow table and replacing the numerical source address and the numerical destination address from the flow table with the associated text network addresses identified from the mapping table,
wherein the address analysis tool further comprises a data agent configured to receive the numerical network address and to access the network to dynamically create new mappings for said mapping table when said possible numerical network addresses do not include the numerical network address,
wherein the flow record storage is configured to receive the text network address and to modify the stored flow record to include the text network address.

2. The system of claim 1, further comprising a user interface configured to receive and display the flow record and the text network address.

3. The system of claim 2, wherein the network device is configured to receive an indication of said numerical network address from said user interface.

4. The system of claim 3, wherein said user interface is configured to forward the indication of said numerical network address in response to predefined criteria.

5. The system of claim 1, wherein the address analysis tool is further configured to search said new mappings for said received numerical network address.

6. The system of claim 5, wherein, when said received numerical network address is not included in said new mappings, said data agent is configured to repeat the creation of new mappings and the address analysis tool is configured to search again in said new mappings for said received numerical network address.

7. The system of claim 6, wherein the address analysis tool is configured to stop searching for the received numerical network address after either a certain time duration or after a prespecified number of attempts.

8. The system of claim 1, wherein each of said mappings expires after a prespecified period of time.

9. A method for resolving network address to host names in network flows for a network device (120) of a system comprising the network device (120), a flow record storage (130), a data analysis tool (150) and an address analysis tool (151, 630), the method comprising:
receiving at the flow record storage a flow record from the network device; storing at the flow record storage said flow record from said network device in a flow table comprising a flow record identifier, numerical source address, numerical destination address, time stamp value, and byte size value; using by the data analysis tool the stored flow records and statistical models to generate a statistical result that is subsequently stored in the flow record storage, wherein the statistical models are defined to solve network usage problems including network security abuse or fraud; and accessing by the data analysis tool said stored flow record and identifying a numerical network address contained in the stored flow record,
wherein the address analysis tool comprises a mapping table (500), said mapping table comprising a plurality of mappings of numerical network addresses (510) to possible text network addresses (520), wherein each of said mappings associates one of said possible numerical network address with one of said possible text network addresses, wherein the address analysis tool receives the numerical network address, identifies one of said mappings corresponding to said numerical network address, and returns a text network address associated in said one identified mapping; creating by the address analysis tool further a modified flow table (530) using the mapping table, wherein the address analysis tool further creates the modified flow table by identifying the numerical source address and the numerical destination address in the flow table and replacing the numerical source address and the numerical destination address from the flow table with the associated text network addresses identified from the mapping table,
wherein the address analysis tool further comprises a data agent which receives the numerical network address and accesses the network to dynamically create new mappings for said mapping table when said possible numerical network addresses do not include the numerical network address; receiving by the flow record storage the text network address and modifying the stored flow record to include the text network address.

10. The method of claim 9,
further comprising the step of displaying the flow record and the host name.

11. The method of claim 9, wherein mappings in the mapping table expire after a prespecified period of time.

## Patentansprüche

1. System zur Auflösung einer Netzwerkadresse in Hostnamen in Netzwerkflüssen für eine Netzwerkeinrichtung, mit
der Netzwerkeinrichtung (120), die zur Erzeugung eines Flussdatensatzes eingerichtet ist,
einem Flussdatensatzspeicher (130), der zum Empfangen des Flussdatensatzes von der Netzwerkeinrichtung (120) und zur Speicherung des Flussdatensatzes in einer Flusstabelle (140, 300) eingerichtet ist, die einen Flussdatensatzidentifizierer (310), eine numerische Quellenadresse (320), eine numerische Zieladresse (330), einen Zeitstempelwert (340) und einen Bytegrößenwert (350) umfasst,
einem Datenanalyseinstrument (150), das eingerichtet ist zum Verwenden der gespeicherten Flussdatensätze und von statistischen Modellen zur Erzeugung eines statistischen Ergebnisses, das anschließend in dem Flussdatensatzspeicher gespeichert wird, wobei die statistischen Modelle zur Lösung von Netzwerknutzungsproblemen einschließlich Netzwerkssicherheitsmissbrauch oder Netzwerkssicherheitsbetrug definiert sind, und
Zugreifen auf den gespeicherten Flussdatensatz und Identifizieren einer in dem gespeicherten Flussdatensatz enthaltenen numerischen Netzwerkadresse, und
einem Adressenanalyseinstrument (151, 630) mit einer Abbildungstabelle (500), wobei die Abbildungstabelle eine Vielzahl von Abbildungen numerischer Netzwerkadressen (510) auf mögliche Textnetzwerkadressen (520) umfasst, wobei jede der Abbildungen eine der möglichen numerischen Netzwerkadressen mit einer der möglichen Textnetzwerkadressen verknüpft, wobei das Adressenanalyseinstrument zum Empfangen der numerischen Netzwerkadresse, Identifizieren einer der Abbildungen, die der numerischen Netzwerkadresse entspricht, und Zurückgeben einer in der einen identifizierten Abbildung verknüpften Textnetzwerkadresse eingerichtet ist,
wobei das Adressenanalyseinstrument ferner zur Erzeugung einer modifizierten Flusstabelle (530) unter Verwendung der Abbildungstabelle eingerichtet ist, wobei das Adressenanalyseinstrument zur Erzeugung der modifizierten Flusstabelle durch Identifizieren der numerischen Quellenadresse und der numerischen Zieladresse in der Flusstabelle und Ersetzen der numerischen Quellenadresse und der numerischen Zieladresse aus der Flusstabelle durch die aus der Abbildungstabelle identifizierten verknüpften Textnetzwerkadressen eingerichtet ist,
wobei das Adressenanalyseinstrument ferner einen Datenagenten umfasst, der zum Empfangen der numerischen Netzwerkadresse und zum Zugreifen auf das Netzwerk zur dynamischen Erzeugung neuer Abbildungen für die Abbildungstabelle eingerichtet ist, wenn die möglichen numerischen Netzwerkadressen die numerische Netzwerkadresse nicht enthalten,
wobei der Flussdatensatzspeicher zum Empfangen der Textnetzwerkadresse und zum Modifizieren des gespeicherten Flussdatensatzes zum Enthalten der Textnetzwerkadresse eingerichtet ist.

2. System nach Anspruch 1, ferner mit einer Benutzerschnittstelle zum Empfangen und Anzeigen des Flussdatensatzes und der Textnetzwerkadresse.

3. System nach Anspruch 2, wobei die Netzwerkeinrichtung zum Empfangen einer Angabe der numerischen Netzwerkadresse von der Benutzerschnittstelle eingerichtet ist.

4. System nach Anspruch 3, wobei die Benutzerschnittstelle zum Weiterleiten der Angabe der numerischen Netzwerkadresse im Ansprechen auf vordefinierte Kriterien eingerichtet ist.

5. System nach Anspruch 1, wobei das Adressenanalyseinstrument ferner zum Durchsuchen der neuen Abbildungen nach der empfangenen numerischen Netzwerkadresse eingerichtet ist.

6. System nach Anspruch 5, wobei, wenn die empfangene numerische Netzwerkadresse nicht in den neuen Abbildungen enthalten ist, der Datenagent zum Wiederholen der Erzeugung neuer Abbildungen eingerichtet ist, und das Adressenanalyseinstrument zum erneuten Suchen nach der empfangenen numerischen Netzwerkadresse in den neuen Abbildungen eingerichtet ist.

7. System nach Anspruch 6, wobei das Adressenanalyseinstrument zum Stoppen der Suche nach der empfangenen numerischen Netzwerkadresse entweder nach einer bestimmten Zeitdauer oder nach einer vorbestimmten Anzahl von Versuchen eingerichtet ist.

8. System nach Anspruch 1, wobei jede der Abbildungen nach einem vorbestimmten Zeitabschnitt verfällt.

9. Verfahren zur Auflösung einer Netzwerkadresse in Hostnamen in Netzwerkflüssen für eine Netzwerkeinrichtung (120) eines Systems mit der Netzwerkeinrichtung (120), einem Flussdatensatzspeicher (130), einem Datenanalyseinstrument (150) und einem Adressenanalyseinstrument (151, 630), mit
Empfangen eines Flussdatensatzes von der Netzwerkeinrichtung an dem Flussdatensatzspeicher,
Speichern des Flussdatensatzes von der Netzwerkeinrichtung an dem Flussdatensatzspeicher in einer Flusstabelle, die einen Flussdatensatzidentifizierer, eine numerische Quellenadresse, eine numerische Zieladresse, einen Zeitstempelwert und einen Bytegrößenwert umfasst,
Verwenden der gespeicherten Flussdatensätze und von statistischen Modellen durch das Datenanalyseinstrument zur Erzeugung eines statistischen Ergebnisses, das anschließend in dem Flussdatensatzspeicher gespeichert wird, wobei die statistischen Modelle zum Lösen von Netzwerknutzungsproblemen einschließlich Netzwerkssicherheitsmissbrauch oder Netzwerkssicherheitsbetrug definiert sind, und
Zugreifen auf den gespeicherten Flussdatensatz durch das Datenanalysewerkzeug und Identifizieren einer in dem gespeicherten Flussdatensatz enthaltenen numerischen Netzwerkadresse,
wobei das Adressenanalysewerkzeug eine Abbildungstabelle (500) umfasst, wobei die Abbildungstabelle eine Vielzahl von Abbildungen numerischer Netzwerkadressen (510) auf mögliche Textnetzwerkadressen (520) umfasst, wobei jede der Abbildungen eine der möglichen numerischen Netzwerkadressen mit einer der möglichen Textnetzwerkadressen verknüpft, wobei das Adressenanalyseinstrument die numerische Netzwerkadresse empfängt, eine der Abbildungen identifiziert, die der numerischen Netzwerkadresse entspricht, und eine in der einen identifizierten Abbildung verknüpfte Textnetzwerkadresse zurückgibt,
weiteres Erzeugen einer modifizierten Flusstabelle (530) durch das Adressenanalyseinstrument unter Verwendung der Abbildungstabelle, wobei das Adressenanalysewerkzeug die modifizierte Flusstabelle ferner durch Identifizieren der numerischen Quellenadresse und der numerischen Zieladresse in der Flusstabelle und Ersetzen der numerischen Quellenadresse und der numerischen Zieladresse aus der Flusstabelle durch die aus der Abbildungstabelle identifizierten verknüpften Textnetzwerkadressen erzeugt,
wobei das Adressenanalyseinstrument ferner einen Datenagenten umfasst, der die numerische Netzwerkadresse empfängt und auf das Netzwerk zur dynamischen Erzeugung neuer Abbildungen für die Abbildungstabelle zugreift, wenn die möglichen numerischen Netzwerkadressen die numerische Netzwerkadresse nicht enthalten,
Empfangen der Textnetzwerkadresse durch den Flussdatensatzspeicher und Modifizieren des gespeicherten Flussdatensatzes zum Enthalten der Textnetzwerkadresse.

10. Verfahren nach Anspruch 9,
ferner mit dem Schritt eines Anzeigens des Flussdatensatzes und des Hostnamens.

11. Verfahren nach Anspruch 9, wobei Abbildungen in der Abbildungstabelle nach einem vorbestimmten Zeitabschnitt verfallen.

## Revendications

1. Système destiné à traduire une adresse de réseau en des noms d'hôte dans des flux de réseau d'un dispositif de réseau, le système comprenant :
le dispositif de réseau (120) conçu pour produire un enregistrement de flux ;
une mémoire d'enregistrements de flux (130) conçue pour recevoir ledit enregistrement de flux en provenance dudit dispositif de réseau (120) et pour stocker ledit enregistrement de flux dans une table de flux (140, 300) comprenant un identificateur d'enregistrement flux (310), une adresse numérique source (320), une adresse numérique de destination (330), une valeur d'horodatage (340), et une valeur de taille en octets (350) ;
un outil d'analyse de données (150) conçu pour :
utiliser les enregistrements de flux stockés et des modèles statistiques pour produire un résultat statistique qui est ensuite stocké dans la mémoire d'enregistrements de flux, dans lequel les modèles statistiques sont définis pour résoudre des problèmes liés à l'utilisation d'un réseau, incluant la violation de sécurité ou la fraude sur un réseau, et
accéder audit enregistrement de flux stocké et identifier une adresse numérique de réseau contenue dans l'enregistrement de flux stocké ; et
un outil d'analyse d'adresses (151, 630) comprenant une table de mappages (500), ladite table de mappages comprenant une pluralité de mappages d'adresses numériques de réseau (510) vers des adresses textuelles de réseau possibles (520), dans lequel chacun desdits mappages associe l'une desdites adresses numériques de réseau possibles à l'une desdites adresses textuelles de réseau possibles, dans lequel l'outil d'analyse d'adresses est conçu pour recevoir l'adresse numérique de réseau, pour identifier l'un desdits mappages correspondant à ladite adresse numérique de réseau, et pour retourner une adresse textuelle de réseau associée dans ledit mappage identifié,
dans lequel l'outil d'analyse d'adresses est conçu en outre pour créer une table de flux modifiée (530) à l'aide de la table de mappages, dans lequel l'outil d'analyse d'adresses est conçu pour créer la table de flux modifiée en identifiant l'adresse numérique source et l'adresse numérique de destination dans la table de flux et en remplaçant l'adresse numérique source et l'adresse numérique de destination provenant de la table de flux par les adresses textuelles de réseau associées, identifiées à partir de la table de mappages,
dans lequel l'outil d'analyse d'adresses comprend en outre un agent de données conçu pour recevoir l'adresse numérique de réseau et pour accéder au réseau afin de créer dynamiquement de nouveaux mappages destinés à ladite table de mappages, lorsque lesdites adresses numériques de réseau possibles n'incluent pas l'adresse numérique de réseau,
dans lequel la mémoire d'enregistrements de flux est conçue pour recevoir l'adresse textuelle de réseau et pour modifier l'enregistrement de flux stocké afin d'inclure l'adresse textuelle de réseau.

2. Système selon la revendication 1, comprenant en outre une interface utilisateur conçue pour recevoir et afficher l'enregistrement de réseau et l'adresse textuelle de réseau.

3. Système selon la revendication 2, dans lequel le dispositif de réseau est conçu pour recevoir une indication de ladite adresse numérique de réseau en provenance de ladite interface utilisateur.

4. Système selon la revendication 3, dans lequel ladite interface utilisateur est conçue pour transférer l'indication de ladite adresse numérique de réseau en réponse à des critères prédéfinis.

5. Système selon la revendication 1, dans lequel l'outil d'analyse d'adresses est conçu en outre pour rechercher dans lesdits nouveaux mappages ladite adresse numérique de réseau reçue.

6. Système selon la revendication 5, dans lequel, lorsque ladite adresse numérique de réseau reçue n'est pas incluse dans lesdits nouveaux mappages, ledit agent de données est conçu pour répéter la création de nouveaux mappages et l'outil d'analyse d'adresses est conçu pour rechercher de nouveau parmi lesdits nouveaux mappages ladite adresse numérique de réseau reçue.

7. Système selon la revendication 6, dans lequel l'outil d'analyse d'adresses est conçu pour cesser de rechercher l'adresse numérique de réseau reçue, soit après une certaine durée soit après un nombre prédéterminé de tentatives.

8. Système selon la revendication 1, dans lequel chacun desdits mappages expire après une période de temps prédéterminée.

9. Procédé pour traduire une adresse de réseau en des noms d'hôte dans des flux de réseau d'un dispositif de réseau (120) d'un système comprenant le dispositif de réseau (120), une mémoire d'enregistrements de flux (130), un outil d'analyse de données (150) et un outil d'analyse d'adresses (151, 630), le procédé comprenant les étapes suivantes :
recevoir dans la mémoire d'enregistrements de flux un enregistrement de flux en provenance du dispositif de réseau ;
stocker dans la mémoire d'enregistrements de flux ledit enregistrement de flux provenant dudit dispositif de réseau dans une table de flux comprenant un identificateur d'enregistrement flux, une adresse numérique source, une adresse numérique de destination, une valeur d'horodatage, et une valeur de taille en octets ;
utiliser, au moyen de l'outil d'analyse de données, les enregistrements de flux stockés et des modèles statistiques pour produire un résultat statistique qui est ensuite stocké dans la mémoire d'enregistrements de flux, dans lequel les modèles statistiques sont définis pour résoudre des problèmes liés à l'utilisation d'un réseau, incluant la violation de sécurité ou la fraude sur un réseau ; et
accéder, au moyen de l'outil d'analyse de données, audit enregistrement de flux stocké et identifier une adresse numérique de réseau contenue dans l'enregistrement de flux stocké,
dans lequel l'outil d'analyse d'adresses comprend une table de mappages (500), ladite table de mappages comprenant une pluralité de mappages d'adresses numériques de réseau (510) vers des adresses textuelles de réseau possibles (520), dans lequel chacun desdits mappages associe l'une desdites adresses numériques de réseau possibles à l'une desdites adresses textuelles de réseau possibles, dans lequel l'outil d'analyse d'adresses reçoit l'adresse numérique de réseau, identifie l'un desdits mappages correspondant à ladite adresse numérique de réseau, et retourne une adresse textuelle de réseau associée dans ledit mappage identifié ;
créer en outre au moyen de l'outil d'analyse d'adresses une table de flux modifiée (530) à l'aide de la table de mappages, dans lequel l'outil d'analyse d'adresses crée en outre la table de flux modifiée en identifiant l'adresse numérique source et l'adresse numérique de destination dans la table de flux et en remplaçant l'adresse numérique source et l'adresse numérique de destination provenant de la table de flux par les adresses textuelles de réseau associées, identifiées à partir de la table de mappages,
dans lequel l'outil d'analyse d'adresses comprend en outre un agent de données qui reçoit l'adresse numérique de réseau et accède au réseau pour créer dynamiquement de nouveaux mappages destinés à ladite table de mappages, lorsque lesdites adresses numériques de réseau possibles n'incluent pas l'adresse numérique de réseau ;
recevoir, au moyen de la mémoire d'enregistrements de flux, l'adresse textuelle de réseau et modifier l'enregistrement de flux stocké afin d'inclure l'adresse textuelle de réseau.

10. Procédé selon la revendication 9,
comprenant en outre l'étape consistant à afficher l'enregistrement de flux et le nom d'hôte.

11. Procédé selon la revendication 9, dans lequel les mappages de la table de mappages expirent après une période de temps prédéterminée.
